# EUROPÄISCHE PATENTSCHRIFT

(11) **EP 0 515 984 B1**
(45) Veröffentlichungstag und Bekanntmachung des Hinweises auf die Patenterteilung: **22.02.1995**
(21) Anmeldenummer: 92108604.7
(22) Anmeldetag: 21.05.1992
(51) Int. Cl.: F15B 21/06, F03G 7/06

(54) **Elektrochemischer Aktor**
Electrochemical actuator
Actionneur électro-chimique

(30) Priorität: 23.05.1991 DE 4116739
(43) Veröffentlichungstag der Anmeldung: 02.12.1992
(73) Patentinhaber: Daimler-Benz Aktiengesellschaft, 70546 Stuttgart (DE)
(72) Erfinder: Kempe, Wolfgang, W-6082 Mörfelden-Walldorf (DE)
(74) Vertreter: Vogl, Leo, Dipl.-Ing.

(56) Entgegenhaltungen:
- EP-A- 0 082 591
- EP-A- 0 114 484
- EP-A- 0 415 533
- EP-A- 0 470 743
- DE-A- 1 671 482
- DE-A- 2 431 552
- DE-C- 3 316 258
- US-A- 3 544 237
- US-A- 4 159 367
- PATENT ABSTRACTS OF JAPAN vol. 7, no. 227 (M-248)(1372) 7. Oktober 1983

## Beschreibung

Die Erfindung betrifft einen elektrochemischen Aktor mit einem abgeschlossenen Gasraum und mindestens einer Zelle mit mindestens zwei Elektroden, von denen eine eine elektrochemisch reversible, oxidierbare Festkörperelektrode ist und mindestens eine andere als Gegenelektrode dient, wobei durch einen reversiblen, von einem Gleichstrom hervorgerufenen elektrochemischen Reaktionsablauf in dem Gasraum ein in eine Bewegung umsetzbarer Druckaufbau oder Druckabbau bewirkt wird.

Aus der DE-C-33 16 258 ist ein als Stellantrieb dienender elektrochemischer Aktor mit einem abgeschlossenen Gasraum bekannt, dessen Innendruck durch eine chemische Reaktion, bei der ein Gas entsteht, auf- oder abgebaut wird. Die chemische Reaktion wird bewirkt durch einen Gleichstrom, der durch Elektroden im Innern des Gasraums geleitet wird. Ein solches Stellglied benötigt für die reversiblen Reaktionen zur Erzeugung bzw. zum Abbau des Gases eine verhältnismässig kleine Spannung und einen grossen Strom und ist deshalb vor allem bei geringen Anforderungen an die Grösse der Stellkräfte und an die Zeit zur Bewegung des Stellgliedes geeignet.

Hier will die Erfindung Abhilfe schafften. Die Erfindung, wie sie in den Ansprüchen gekennzeichnet ist, löst die Aufgabe, einen gattungsgemässen elektrochemischen Aktor so zu verbessern, dass er für höhere Ansprechgeschwindigkeiten und höhere Stellkräfte ausgelegt werden kann.

Die durch die Erfindung erreichten Vorteile sind im wesentlichen darin zu sehen, dass der Gasdruck im Innern der Gaskammer ohne weitere Zufuhr von Energie aufrechterhalten wird. Wenn der Gasraum von einem dehnbaren Gehäuse umgeben und an dem Gehäuse ein Stössel befestigt ist, lässt sich der Aktor als pneumatischer Antrieb einsetzen, der den nötigen Gasdruck aus reversiblen elektrochemischen Reaktionen bezieht. Durch Anlegen einer Gleichspannung wird im Innern des Aktors Wasserstoffgas erzeugt, das eine Druckerhöhung hervorruft; bei Umkehrung der Polarität baut sich der Druck ab durch Oxidation des Wassserstoffgases zu Wasser. Die Druckänderungen lassen sich über einen Stössel zum Beispiel an ein unter Federdruck stehendes Ventil übertragen, welches je nach der Druckänderung geschlossen bzw. geöffnet wird. Eine solche Vorrichtung könnte als Stellglied einer Steuerung oder eines Regelkreises dienen. Denkbar wäre die Ausstattung eines jeden Heizkörperventils in einem Gebäude mit einem solchen Stellglied und die zentrale Ansteuerung der Stellglieder durch einen Grossrechner. Durch Programmierung des Grossrechners könnte festgelegt werden, in welchen Räumen und zu welchen Zeiten ein Heizkörperventil geöffnet oder geschlossen werden soll.
Wenn mehrere mit jeweils einer Festkörperelektrode ausgestattete, in Reihe geschaltete Zellen in einem Aktor angeordnet sind, steht insgesamt eine grössere Oberfläche für die elektrochemischen Reaktionen zur Verfügung, was die Geschwindigkeit des Stellgliedes, die Stellkraft und den Hub erhöht. An die Reihenschaltung mehrerer Zellen wird eine höhere Spannung angeschlossen als an eine einzelne Zelle, damit an jeder Zelle die für die chemischen Reaktionen erforderliche Spannung liegt. Bei einer Reihenschaltung ist also die Gesamtspannung höher als bei Verwendung einer einzelnen Zelle, ohne dass der Strom entsprechend grösser ist. Der Aktor kann also in Abhängigkeit von seinem inneren Aufbau bei verschiedenen Gleichspannungen betrieben werden. Wenn eine Versorgung mit einer niedrigen Spannung in der Steuer- oder Regeleinrichtung nicht sicher gewährleistet ist, so kann der Aktor auch für den Betrieb bei einer höheren Gleichspannung ausgelegt werden.
Vorzugsweise eignet sich ein solcher Aktor als Ersatz für einen motorischen Antrieb für ein Ventil. Wegen der Flexibilität bezüglich der Höhe der Gleichspannung und der Stromaufnahme lässt sich der Aktor besonders günstig in einem explosionsgefährdeten Bereich einsetzen. Dort gelten nämlich strenge Vorschriften für die maximal zulässige Spannung und den Strom bei elektrischen Geräten, soweit sie nicht mit aufwendigen Schutzvorrichtungen ausgerüstet sind. Da der Aktor mit genügend kleinen Spannungen und Strömen betrieben werden kann, lässt er sich ohne diese Schutzvorrichtungen betreiben. Ein derartiger Aktor für den explosionsgefährdeten Bereich weist also kleine Abmessungen auf und ist kostengünstig herstellbar.

Weitere vorteilhafte Ausbildungen sind den Unteransprüchen zu entnehmen.

Die Erfindung wird im folgenden an Hand von in drei Zeichnungen dargestellten Ausführungsbeispielen, aus denen sich weitere Merkmale, Einzelheiten und Vorteile ergeben, näher beschrieben.
- Fig. 1: zeigt im Schnitt die wesentlichen Teile einer möglichen Ausführung eines mit einer einzigen Zelle ausgerüsteten Aktors
- Fig. 2: zeigt die Verschaltung und den Aufbau von fünf in Reihe geschalteten, im Schnitt dargestellten Zellen
- Fig. 3: veranschaulicht die Verschaltung von vier übereinander angeordneten Zellen, wobei zwei Reihenschaltungen aus jeweils zwei Zellen parallelgeschaltet sind.

Gleiche Teile sind in allen drei Figuren mit den gleichen Bezugszeichen versehen; die richtigen Grössenverhältnisse sind in den Darstellungen nicht berücksichtigt.

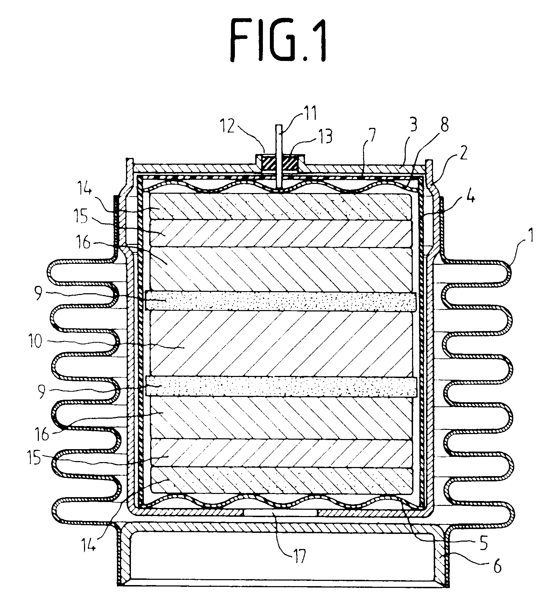

Fig. 1 zeigt vereinfachend einen elektrochemischen Aktor im Schnitt. Am oberen Teil innerhalb eines Edelstahlfaltenbalgs (1) ist eine Hülse (2) befestigt, in der sich eine einzige elektrochemische Zelle befindet. Die elektrisch leitende Hülse (2) ist durch einen ebenfalls leitenden Deckel (3) nach oben hin gasdicht abgeschlossen. Die Hülse (2) ist innen mit einer Isolierhülse (4) aus Polyethylen ausgekleidet und weist unten auf ihrem Boden ein als elektrischer Kontakt dienendes Gitter (5) auf. Der Edelstahlfaltenbalg (1) ist unten durch einen angeschweissten Boden (6) gasdicht abgeschlossen.

Die Hülse (2) ist fast vollständig mit mehreren übereinanderliegenden Schichten einer elektrochemischen Zelle ausgefüllt; das entstehende Gas soll sich vorwiegend im unteren Teil des Edelstahlbalges (1) ansammeln und nur geringfügig in der Hülse (2). Unter dem Deckel (3) der Hülse (2) befindet sich eine Isolierscheibe (7), die die elektrische Verbindung zwischen einem darunter angeordneten gitterförmigen elektrischen Kontakt (8) und dem Deckel (3) verhindert. Unter dem Kontakt (8) liegt eine flache Mehrschichtelektrode, die sich aus drei Schichten zusammensetzt. Unmittelbar darunter ist ein mit Kaliumhydroxidlösung (KOH) getränkter Separator (9) aus keramischem Fasermaterial angeordnet, darunter eine Festkörperelektrode (10). Unterhalb folgen spiegelbildlich zu der Festkörperelektrode (10) die gleichen Schichten wie oberhalb, also wiederum ein mit Kaliumhydroxidlösung getränkter Separator (9) und eine Mehrschichtelektrode (mit drei Schichten), die unmittelbar auf dem elektrisch leitenden Gitter (5) liegt. Die genannten Schichten sind nicht alle gleich dick, aber sie haben - bis auf die Separatoren (9), die zur besseren Verhinderung eines Kurzschlusses zwischen ihrer Ober- und ihrer Unterseite über ihren ganzen Umfang seitlich vorstehen - ungefähr die gleichen Ausmasse in der Fläche, so dass jede Schicht die unter ihr angeordnete abdeckt. Durch die Isolierhülse (4) wird ein unerwünschter elektrischer Kontakt zwischen den Schichten (9, 10, 14, 15, 16) und der Hülse (2) verhindert. Ausserdem wird durch die Isolierhülse (4) ein Kurzschluss zwischen dem elektrischen Kontakt (8) und der Hülse (2) vermieden.
Die in der Mitte angeordnete Festkörperelektrode (10) enthält Silber (sie könnte statt dessen auch Nickel enthalten). Sie ist über einen nicht dargestellten Kontakt mit dem einen Pol einer Gleichspannungsquelle verbunden. Das Gitter (5) und der elektrische Kontakt (8) sind in nicht dargestellter Weise untereinander verbunden und haben das gleiche Potential. Sie bilden die Gegenelektroden zu der Festkörperelektrode (10) und sind mit dem anderen Pol der Gleichspannungsquelle verbunden.

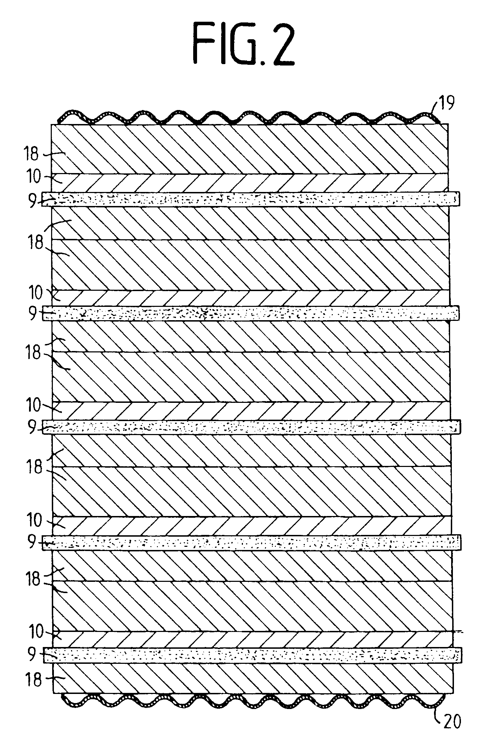

Wenn mehrere Zellen in Reihe geschaltet sind und dazu einen inneren Aufbau haben, wie er in der Beschreibung zu der Fig. 2 weiter unten noch näher erläutert ist, wird die Gleichspannung zwischen den elektrischen Kontakt (8) und das Gitter (5) gelegt; die Festkörperelektroden (10) erhalten bei einer Reihenschaltung keine Anschlüsse. Der Strom fliesst über die Hülse (2) zu dem elektrisch leitenden Gitter (5) am Boden der Hülse (2). Der Gegenpol der Gleichspannungsquelle liegt an einem leitenden Stift (11), der durch eine Öffnung (12) im Deckel (3) der Hülse (2) geführt ist und den elektrischen Kontakt (8) berührt. Damit bei einer Reihenschaltung mehrerer Zellen nicht an dem elektrischen Kontakt (8) und am Gitter (5) das gleiche Potential liegt, wird der Stift (11) im Bereich der Öffnung (12) im Deckel (3) durch eine Isolierschicht (13) geführt, die einen Kurzschluss zwischen dem Stift (11) und dem Deckel (3) verhindert.
Die beiden Mehrschichtelektroden oberhalb und unterhalb des Separators (9) haben den gleichen Aufbau: Auf einer - gasdurchlässigen - ca. 0,2 mm dicken Rückschicht (14) aus Graphitpapier befindet sich eine ca. 0,35 mm dicke erste Kohleschicht (15), die ca. 30 Gewichts-% Polytertrafluorethylen (PTFE) aufweist. Das Polytetrafluorethylen dient als Bindemittel für den Kohlenstoff, es übernimmt ausserdem eine stützende Funktion ("Gerüst") und trägt zur Stabilität der Mehrschichtelektrode bei. Als Bindemittel eignen sich auch Polypropylen und Polyethylen. Auf dieser ersten Kohleschicht (15) befindet sich eine weitere Kohleschicht (16). Sie hat eine Dicke von ca. 0,45 mm und weist einen Anteil von 15-18 Gewichts-% Polytetrafluorethylen auf. Dieser Anteil reicht für eine zuverlässige Haftung mit der ersten Kohleschicht (15) aus. Die erste Kohleschicht (15) mit dem grösseren Anteil an Polytetrafluorethylen ist stärker wasserabweisend (stärker hydrophob) als die zweite Kohleschicht (16). Dadurch wird verhindert, dass Kaliumhydroxidlösung durch die Kohleschichten zu der Rückschicht (14) aus Graphitpapier vordringt. Die Kohleschichten werden durch Sintern hergestellt. Sie sind mit feinverteiltem, als Katalysator dienendem Platin durchsetzt, das durch ein Tauchverfahren in die Mehrschichtelektroden eingebracht wird. Als Katalysator eignet sich auch Palladium.

Wenn die Festkörperelektrode (10) mit dem Pluspol einer Gleichspannungsquelle (mit ca. 2 V) verbunden wird und das Gitter (5) und der Kontakt (8) mit dem Minuspol der Gleichspannungsquelle, dann bildet sich an den Mehrschichtelektroden Wasserstoffgas und an dem Silber der Festkörperelektrode (10) entsteht Silberoxid. Diese Vorgänge sind reversibel; nach einer Umpolung der Spannung laufen sie in umgekehrter Richtung ab (nach der Umpolung wird also Wasserstoffgas wieder abgebaut).
Es handelt sich um folgende reversible Reaktionsabläufe:
An dem Silber der Festkörperelektrode (10):

Ag + 2(OH)⁻ <--> AgO + H₂O + 2e⁻

An den Mehrschichtelektroden:

2H₂O + 2e⁻ <--> 2(OH)⁻ + H₂.

Das Wasserstoffgas gelangt nach seiner Entstehung sehr rasch durch die Schichten in der Hülse (2), durch das Gitter (5) und durch eine Öffnung (17) in Boden der Hülse (2) in das Innere des gasdichten Edelstahlfaltenbalges (1). Der steigende Gasdruck bewirkt ein Ausdehnen des Edelstahlfaltenbalges (1). Wenn der Edelstahlfaltenbalg (1) kraftschlüssig (z. B. durch einen an dem beweglichen Boden 6 des Edelstahlfaltenbalges 1 befestigten Stössel) mit einem Ventil verbunden ist, lässt sich der Wechsel des Gasdrucks in eine Öffnungs- oder Schliessbewegung umsetzen. Je mehr Gas in den Edelstahlfaltenbalg (1) eindringt und je geringer sein Innendurchmesser ist, desto grösser ist der Hub des Aktors.

Fig. 2 veranschaulicht die Verschaltung von fünf übereinander angeordneten Zellen zu einer Reihenschaltung; dazu sind die Schichten der beiden Zellen im Schnitt dargestellt (dabei sind die Mehrschichtelektroden (18) jeweils als eine einzige Schicht dargestellt). Die Zellen sind in einer Hülse und in einem Edelstahlfaltenbalg angeordnet, wie es oben im Zusammenhang mit der Fig. 1 erläutert ist. Jede Zelle besteht im Falle einer Reihenschaltung aus zwei Mehrschichtelektroden (18) (der Aufbau der Mehrschichtelektroden ist oben in der Beschreibung zu der Fig. 1 erläutert), zwischen denen eine Festkörperelektrode (10) und ein darunterliegender Separator (9) angeordnet ist. Die beiden Mehrschichtelektroden (18) einer jeden Zelle sind so gelegt, dass ihre Rückschichten aus Graphitpapier aussen angeordnet sind, d. h. die Rückschichten liegen weder auf der Festkörperelektrode (10) noch auf dem Separator (9). Es liegen jeweils zwei Rückschichten benachbarter Zellen unmittelbar aufeinander. Für die Zusammensetzung der Schichten gilt das zu Fig. 1 bereits weiter oben Geschriebene.

In jeder der übereinanderliegenden Zellen ist der Separator (9) jeweils unterhalb der Festkörperelektrode (10) angeordnet. Die Gleichspannung wird an die beiden zuoberst und zuunterst angeordneten gitterförmigen Kontakte (19, 20) angelegt (die Festkörperelektroden 10 haben keinen Spannungsanschluss). Wenn eine Gleichspannung von ca. 10 V angelegt wird, hat jede Zelle infolge der Anordnung als Reihenschaltung eine Spannung von ca. 2 V; diese Spannung reicht für den Ablauf der elektrochemischen Reaktionen aus. Die dargestellte Reihenschaltung kann um weitere, ebenso aufgebaute Zellen erweitert werden. Es müsste dann eine entsprechend höhere Gleichspannung für die chemischen Reaktionen angelegt werden. Selbstverständlich ist auch eine Reihenschaltung mit einer geringeren Anzahl ebenso aufgebauter Zellen möglich. Es wäre dann eine niedrigere Gleichspannung für die Reihenschaltung notwendig.

Je mehr Zellen vorhanden sind, desto mehr Wasserstoffgas wird (in der gleichen Zeit) erzeugt oder abgebaut; es werden also durch Einbau mehrerer Zellen in einen Aktor Hub, Stellkraft und die Schnelligkeit für die Bewegung des Edelstahlfaltenbalges (1) vergrössert.

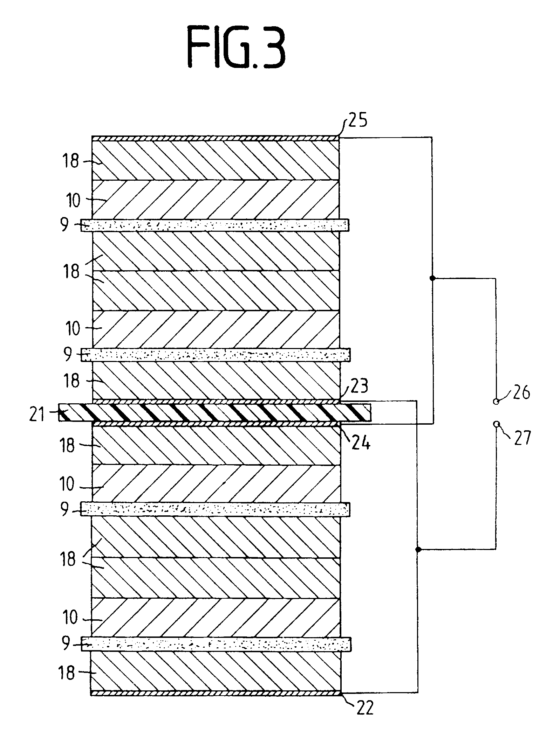

Fig. 3 zeigt die Parallelschaltung von zwei in Reihe geschalteten Zellen. Jede der beiden Reihenschaltungen weist zwei Zellen auf. Für den Aufbau jeder Reihenschaltung und die Zusammensetzung ihrer Schichten gelten entsprechend die Ausführungen zu der Fig. 2. Auch in Fig. 3 sind die Mehrschichtelektroden (18) jeweils als eine Schicht dargestellt.

Die beiden Reihenschaltungen mit den übereinanderliegenden, mehrschichtigen Zellen, sind ihrerseits, getrennt durch eine Isolierschicht (21), übereinander angeordnet. Die beiden Reihenschaltungen weisen jeweils oben und unten einen gitterförmigen Kontakt auf. Die beiden gitterförmigen, untenliegenden Kontakte (22, 23) der beiden Reihenschaltungen und die beiden gitterförmigen, obenliegenden Kontakte (24, 25) sind jeweils miteinder (zu einer Parallelschaltung der beiden Reihenschaltungen) verschaltet und sind zu jeweils einem Pol einer nicht dargestellten Gleichspannungsquelle geführt, die für die elektrochemischen Reaktionen an die Anschlüsse (26, 27) angeschlossen wird.

## Patentansprüche

1. Elektrochemischer Aktor mit einem abgeschlossenen Gasraum und mindestens einer Zelle mit mindestens zwei Elektroden, von denen eine eine elektrochemisch reversible, oxidierbare Festkörperelektrode ist und mindestens eine andere als Gegenelektrode dient, wobei durch einen reversiblen, von einem Gleichstrom hervorgerufenen elektrochemischen Reaktionsablauf in dem Gasraum ein in eine Bewegung umsetzbarer Druckaufbau oder Druckabbau bewirkt wird,
**dadurch gekennzeichnet,**
dass die Gegenelektrode zu der Festkörperelektrode (10) eine poröse Mehrschichtelektrode ist, dass sie eine gasdurchlässige Rückschicht (14) aus Graphitpapier aufweist, eine darüber angeordnete erste Kohleschicht (15) mit einem so hohen Anteil an einem wasserabweisenden Bindemittel, dass kein Wasser durch diese Kohleschicht (15) bis zu der Rückschicht (14) gelangt, und schliesslich eine darüber befindliche zweite Kohleschicht (16) mit einem geringeren Anteil an dem wasserabweisenden Bindemittel, dass die Kohleschichten mit einem feinverteilten Katalysator durchsetzt sind und eine wässerige basische Lösung enthalten, dass die Zelle mindestens einen an der Festkörperelektrode (10) einerseits und an der zweiten Kohleschicht (16) der Mehrschichtelektrode andererseits liegenden, mit der wässerigen basischen Lösung getränkten Separator (9) aus isolierendem Material aufweist und dass für den Ablauf der elektrochemischen Reaktionen eine Gleichspannung zwischen der Festkörperelektrode (10) und der davon durch den Separator (9) abgetrennten Mehrschichtelektrode angelegt wird.

2. Elektrochemischer Aktor nach Anspruch 1,
**dadurch gekennzeichnet,**
dass die erste Kohleschicht (15) einen Bindemittelanteil von ca. 25 bis 35 Gewichts-% hat, und die zweite Kohleschicht (16) einen Bindemittelanteil von ca. 10 bis 18 Gewichts-%.

3. Elektrochemischer Aktor nach Anspruch 1 oder 2,
**dadurch gekennzeichnet,**
dass die Mehrschichtelektrode, die Festörpelektrode (10) und der Separator (9) als flache Schichten ausgebildet sind und dass der Separator (9) eine grössere flächenhafte Ausdehnung hat als die anderen Schichten.

4. Elektrochemischer Aktor nach einem der vorangehenden Ansprüche,
**dadurch gekennzeichnet,**
dass der Separator (9) aus keramischem Fasermaterial besteht.

5. Elektrochemischer Aktor nach einem der vorangehenden Ansprüche,
**dadurch gekennzeichnet,**
dass die Festkörperelektrode (10) Silber enthält.

6. Elektrochemischer Aktor nach einem der vorangehenden Ansprüche,
**dadurch gekennzeichnet,**
dass die Festkörperelektrode (10) Nickel enthält.

7. Elektrochemischer Aktor nach einem der vorangehenden Ansprüche,
**dadurch gekennzeichnet,**
dass die wässerige keramische Lösung Kaliumhydroxidlösung enthält.

8. Elektrochemischer Aktor nach einem der vorangehenden Ansprüche,
**dadurch gekennzeichnet,**
dass das wasserabweisende Bindemittel Polytetrafluorethylen ist.

9. Elektrochemischer Aktor nach einem der vorangehenden Ansprüche,
**dadurch gekennzeichnet,**
dass das wasserabweisende Bindemittel Polypropylen ist.

10. Elektrochemischer Aktor nach einem der vorangehenden Ansprüche,
**dadurch gekennzeichnet,**
dass das wasserabweisende Bindemittel Polyethylen ist.

11. Elektrochemischer Aktor nach einem der vorangehenden Ansprüche,
**dadurch gekennzeichnet,**
dass der Katalysator Platin ist.

12. Elektrochemischer Aktor nach einem der vorangehenden Ansprüche,
**dadurch gekennzeichnet,**
dass der Katalysator Palladium ist.

13. Elektrochemischer Aktor nach einem der vorangehenden Ansprüche,
**dadurch gekennzeichnet,**
dass mehrere Zellen unmittelbar übereinanderliegend im Innern des Aktors angeordnet sind, das jede Zelle zwischen zwei Mehrschichtelektroden die Festkörperelektrode (10) und einen einzigen daran anliegenden Separator (9) aufweist, wobei die Rückschichten (14) der Mehrschichtelektroden jeweils nach aussen weisen, dass die Festkörperelektroden (10) einheitlich entweder in jeder Zelle jeweils über dem Separator oder jeweils unter dem Separator angeordnet sind und dass die Gleichspannung zwischen der zuunterst liegenden Mehrschichtelektrode der untersten Zelle und der zuoberst liegenden Mehrschichtelektrode der obersten Zelle angelegt wird, so dass sich eine Reihenschaltung der Zellen ergibt.

14. Elektrochemischer Aktor nach Anspruch 13,
**dadurch gekennzeichnet,**
dass mehrere Reihenschaltungen mit jeweils einer gleichen Anzahl von Zellen übereinander angeordnet sind, dass die Reihenschaltungen gegeneinander durch eine Isolierung (21) getrennt sind und dass alle Reihenschaltungen parallel mit der gleichen Gleichspannung versorgt werden.

15. Elektrochemischer Aktor nach einem der Ansprüche 1 bis 12,
**dadurch gekennzeichnet,**
dass sich in seinem Innern nur eine einzige Zelle befindet, dass symmetrisch zu der Festkörperelektrode (10) oberhalb und unterhalb jeweils zunächst der Separator (9) und darüber jeweils die Mehrschichtelektrode angeordnet ist, wobei das Graphitpapier der beiden Merhschichtelektroden jeweils nach aussen weist, und dass sich über dem Graphitpapier jeweils ein elektrischer Kontakt befindet und dass beide Kontakte stets dasselbe Potential haben.

## Claims

1. Electrochemical actuator with a closed gas chamber and at least one cell with at least two electrodes, of which one is an electrochemically reversible and oxidisable solid body electrode and at least one other serves as counterelectrode, wherein a pressure build-up or a pressure decay is caused in the gas chamber by an electrochemical reaction course caused by a direct current, characterised thereby, that the counterelectrode to the solid body electrode (10) is a porous multilayer electrode, that it comprises a gas-permeable back layer (14) of graphite paper, a first carbon layer (15) arranged thereover and with such a high proportion of a water-repellant binding agent that no water gets through this carbon layer (15) to the back layer (14), and finally a second carbon layer (16) disposed thereover and with a lower proportion of the water-repellent binding agent, that the carbon layers are interspersed with a finely distributed catalyst and contain an aqueous basic solution, that the cell displays at least one separator (9), which is of insulating material and impregnated with the aqueous basic solution and which lies against the solid body electrode (10) on the one hand and the second carbon layer (16) of the multilayer electrode on the other hand and that a direct voltage is applied between the solid body electrode (10) and the multilayer electrode, which is separated therefrom by the separator (9), for the course of the electrochemical reactions.

2. Electrochemical actuator according to claim 1, characterised thereby, that the first carbon layer (15) has a proportion of binding agent of about 25 to 35% by weight and the second carbon layer (16) has a proportion of binding agent of about 10 to 18% by weight.

3. Electrochemical actuator according to claim 1 or 2, characterised thereby, that the multilayer electrode, the solid body electrode (10) and the separator (9) are constructed as flat layers and that the separator (9) has a greater extent in area than the other layers.

4. Electrochemical actuator according to one of the preceding claims, characterised thereby, that the separator (9) consists of ceramic fibre material.

5. Electrochemical actuator according to one of the preceding claims, characterised thereby, that the solid body electrode (10) contains silver.

6. Electrochemical actuator according to one of the preceding claims, characterised thereby, that the solid body electrode (10) contains nickel.

7. Electrochemical actuator according to one of the preceding claims, characterised thereby, that the aqueous ceramic solution contains potassium hydroxide solution.

8. Electrochemical actuator according to one of the preceding claims, characterised thereby, that the water-repellent binding agent is polytetrafluoroethylene.

9. Electrochemical actuator according to one of the preceding claims, characterised thereby, that the water-repellent binding agent is polypropylene.

10. Electrochemical actuator according to one of the preceding claims, characterised thereby, that the water-repellent binding agent is polyethylene.

11. Electrochemical actuator according to one of the preceding claims, characterised thereby, that the catalyst is platinum.

12. Electrochemical actuator according to one of the preceding claims, characterised thereby, that the catalyst is palladium.

13. Electrochemical actuator according to one of the preceding claims, characterised thereby, that several cells are arranged to lie one directly above the other in the interior of the activator, that each cell displays the solid body electrode (10) and a single separator (9) lying thereagainst between two multilayer electrodes, wherein the back layers (14) of the multilayer electrodes each time face outwards, that the solid body electrodes (10) are arranged in each cell uniformly either above the separator or below the separator and that the direct voltage is applied between the lowermost multilayer electrode of the lowermost cell and the uppermost multilayer electrode of the uppermost cell so that a series connection of the cells results.

14. Electrochemical actuator according to claim 13, characterised thereby, that several series connections each of a like number of cells are arranged one above the other, that the series connections are separated one from the other by an insulation (21) and that all series connections are supplied in parallel with the same direct voltage.

15. Electrochemical actuator according to one of the claims 1 to 12, characterised thereby, that only a single cell is situated in its interior, that first the separator (9) and each time the multilayer electrode thereover are arranged each time above and below the solid body electrode (10) symmetrically thereto, wherein the graphite paper of both the multilayer electrodes each time faces outwards, and that a respective electrical contact is disposed above the graphite paper and that both the contacts always have the same potential.

## Revendications

1. Actionneur électrochimique avec une chambre à gaz fermée et au moins une cellule avec au moins deux électrodes dont l'une est une électrode solide oxydable et réversible électrochimiquement et au moins l'autre sert de contre-électrode ce qui provoque, par une réaction électrochimique générée par un courant continu, une montée ou une descente en pression convertible en mouvement dans la chambre à gaz,
caractérisé en ce que
la contre-électrode à l'électrode solide (10) est une électrode multicouche poreuse, en ce qu'elle présente une couche arrière (14) perméable au gaz en papier graphite, une première couche de carbone (15) disposée dessus avec une teneur en liant hydrophobe suffisamment élevée pour que, par cette couche de carbone (15), il ne puisse parvenir absolument pas d'eau à la couche arrière (14) et pour finir une seconde couche de carbone (16) par-dessus avec une teneur en liant hydrophobe moins élevée, en ce que les couches de carbone sont garnies d'un catalyseur finement divisé et contiennent une solution aqueuse basique, en ce que la cellule présente au moins un séparateur (9) en matière isolante imprégné d'une solution aqueuse basique, se trouvant, d'une part, contre l'électrode solide (10) et, d'autre part, contre la seconde couche de carbone (16) de l'électrode multicouche et en ce qu'il est appliqué, pour le déroulement des réactions électrochimiques, une tension continue entre l'électrode solide (10) et l'électrode multicouche séparée par le séparateur (9).

2. Actionneur électrochimique selon la revendication 1,
caractérisé en ce que
la première couche de carbone (15) contient un liant d'environ 25 à 35 % en poids et la seconde couche de carbone (16) un liant d'environ 10 à 18 % en poids.

3. Actionneur électrochimique selon la revendication 1 ou 2,
caractérisé en ce que
l'électrode multicouche, l'électrode solide (10) et le séparateur (9) sont conçus comme des couches plates et en ce que le séparateur (9) présente une plus grande extension de surface que les autres couches.

4. Actionneur électrochimique selon l'une des revendications précédentes,
caractérisé en ce que
le séparateur (9) est en matière fibreuse céramique.

5. Actionneur électrochimique selon l'une des revendications précédentes,
caractérisé en ce que
l'électrode solide (10) contient de l'argent.

6. Actionneur électrochimique selon l'une des revendications précédentes,
caractérisé en ce que
l'électrode solide (10) contient du nickel.

7. Actionneur électrochimique selon l'une des revendications précédentes,
caractérisé en ce que
la solution aqueuse céramique contient une solution d'hydroxyde de potassium.

8. Actionneur électrochimique selon l'une des revendications précédentes,
caractérisé en ce que
le liant hydrophobe est du polytétrafluoréthylène.

9. Actionneur électrochimique selon l'une des revendications précédentes,
caractérisé en ce que
le liant hydrophobe est du polypropylène.

10. Actionneur électrochimique selon l'une des revendications précédentes,
caractérisé en ce que
le liant hydrophobe est du polyéthylène.

11. Actionneur électrochimique selon l'une des revendications précédente,
caractérisé en ce que
le catalyseur est du platine.

12. Actionneur électrochimique selon l'une des revendications précédente,
caractérisé en ce que
le catalyseur est du palladium.

13. Actionneur électrochimique selon l'une des revendications précédente,
caractérisé en ce que
plusieurs cellules sont disposées directement les unes au-dessus des autres à l'intérieur de l'actionneur, en ce que chaque cellule présente entre deux électrodes multicouche, les électrodes solides (10) et un séparateur unique (9), les couches arrière (14) des électrodes multicouche étant tournées vers l'extérieur, en ce que les électrodes solides (10) sont disposées unitairement soit dans chaque cellule au-dessus du séparateur soit en dessous du séparateur et en ce que la tension continue est appliquée entre l'électrode multicouche inférieure de la cellule inférieure et l'électrode multicouche supérieure de la cellule supérieure de manière à établir un montage en série des cellules.

14. Actionneur électrochimique selon la revendication 13,
caractérisé en ce que
plusieurs montages en série sont disposés les uns au-dessus des autres avec un même nombre de cellule en ce que les montages en série sont séparés mutuellement par une isolation (21) et en ce que tous les montages en série sont alimentés en parallèle par la même tension continue.

15. Actionneur électrochimique selon l'une des revendications 1 à 12,
caractérisé en ce qu'
à l'intérieur il n'y a qu'une seule cellule, en ce que symétriquement à l'électrode solide (10) au-dessus et en dessous sont tout d'abord disposés le séparateur (9) et au-dessus l'électrode multicouche, le papier graphite des deux électrodes multicouche étant tourné vers l'extérieur, et en ce qu'au-dessus du papier graphite, il y a, à chaque fois, un contact électrique et en ce que les deux contacts présentent constamment le même potentiel.
